# EUROPEAN PATENT APPLICATION

(11) **EP 4 797 015 A1**
(43) Date of publication of application: **26.08.2026**
(21) Application number: 26155347.3
(22) Date of filing: 30.01.2026
(51) Int. Cl.: G05B 13/04, G06N 7/01

(54) **CONTROL PARAMETER OPTIMIZATION**

(30) Priority: 19.02.2025 GB 202502415
(71) Applicant: Motorway Online Ltd, London EC1A 2BN (GB)
(72) Inventor: JONES, Alexander Mackay, London EC1A 2BN (GB); ROCHUSSEN, Thomas Nicholas, London EC1A 2BN (GB); JEYARAYAN, Kisaanth, London EC1A 2BN (GB); JONES, Benjamin Thomas, London EC1A 2BN (GB)
(74) Representative: Reddie & Grose LLP

(57) **Abstract**

The disclosure relates to computer systems 10 and computer-implemented methods 200, 300 for performing a process having a binary output value and for optimizing controllable input parameters of such processes. One computer system 10 comprises at least one processor **11** and memory 12 configured to implement a parameter optimization module 102 for optimizing input parameters of a process having a binary output value, comprising: a probabilistic machine learning model 1021 trained to model a relationship between at least a first controllable input parameter of the process, a second controllable input parameter of the process and the binary output value of the process, the relationship defining an optimized pair of input parameter values 104 comprising an optimized value for the first input parameter and an optimized value for the second input parameter; and a batched binary Bayesian Optimizer 1022 configured to generate, from the trained probabilistic machine learning model 1021, a list 105 comprising a plurality of training pairs of input parameter values, each training pair comprising a value for the first input parameter and a value for the second input parameter. The parameter optimization module 102 is configured to output the optimized pair of input parameter values 104 and the list 105 of training pairs of input parameter values, and to receive binary output values of the process performed using the training pairs of input parameter values. The computer system 10 is configured to periodically retrain, using the received binary output values and values of the first and second input parameters associated therewith, the parameter optimization module 102 to generate a new optimized pair 104 of input values and a new list 105 of training pairs of input parameters.

## Description

### TECHNICAL FIELD

This disclosure relates to optimizing control parameters used in processes having binary output values.

### BACKGROUND

In many areas of technology, processes have controllable parameters whose values will affect the result of the process. For example, when operating a wind turbine generator, the electrical power output will depend not only on the baseline design of the turbine and generator and the speed and direction of incident wind, but on the controllable yaw and turbine blade pitch. It is generally desirable to identify the most optimal combination of controllable parameters for a given process. For example, if the power generated by a wind turbine for a given set combination of wind speed and direction is denoted y(x₁, x₂), where x₁ is the turbine yaw and x₂ is the blade pitch, it is generally desirable to identify the combination of x₁ and x₂ that maximizes y.

As another example, when machining a component using a computer-controlled tool, the inputs to the process include not only the physical design of the component and the material from which it is made, but various controllable parameters such as a speed of rotation and speed or translation of a tool head used to machine the component. The values of these parameters will typically affect the quality and characteristics of the component, and may affect, for example, whether or not the machined component passes a quality control test. In this case, the percentage of components that pass the quality control test may be denoted y(x₁, x₂), where x₁ is and x₂ are the speeds of rotation and translation of the tool head, and it desirable to identify the combination of x₁ and x₂ that maximizes y.

An expert designer or operator of a system may be able to identify a combination of parameters that approximates the optimal combination of parameters. Additionally or alternatively, in many systems it is possible to mathematically model the system and use numerical methods to identify a theoretically optimal combination of parameters. For example, in the case of the wind turbine generator, it may be possible to determine, e.g., using computational fluid dynamics, a functional representation of y(x₁, x₂) in terms of x₁ and x₂ and then perform a numerical method to identify the combination of x₁ and x₂ that maximize y(x₁, x₂).

Challenges exist, however, if the output function, y, cannot be, or cannot easily be, mathematically modelled, i.e., if y is, in effect, a 'black-box function'. This may occur if a process is not deterministic, for example if it exhibits a high degree of sensitivity to one or more of its controllable inputs, if there are one or more variables that are unknown or difficult to quantify (e.g., component aging), or if the relationship between the output and inputs is, to some degree, affected by behavioural factors (e.g., human behavioural factors) that are difficult to quantify or predict. In cases such as this, optimization of the process parameters may demand actual use of the system, rather than modelling, to obtain real data, which may then be used to train a machine learning model. This, however, may present a practical challenge in some systems. For example, searching the entire, or any large part, of a two-dimensional parameter space (x₁, x₂) for an optimal combination of parameters may be time consuming and, in real terms, involve, e.g., manufacturing many components of an unacceptable quality, or extensive operation of a wind turbine generator using parameters that result in poor efficiency, before finding the optimal combination of parameters.

### SUMMARY

According to a first aspect, there is a computer system for performing a process having a binary output value, the computer system comprising at least one processor and memory configured to implement:
a process module configured to receive requests to perform a process and to perform the process in response to the requests, the process having a binary output value and at least a first controllable input parameter and a second controllable input parameter; and
a parameter optimization module configured to output, to the process module:
   an optimized pair of input parameter values comprising an optimized value for the first input parameter and an optimized value for the second input parameter; and
   a list comprising a plurality of training pairs of input parameter values, each training pair comprising a value for the first input parameter and a value for the second input parameter,
wherein the process module is further configured to assign each received request to a first group or to a second group, to perform the process using the optimized pair of input parameters for each request assigned to the first group to generate a first batch of binary output values, and to perform the process using one of the plurality of training pairs of input parameter values for each request assigned to the second group to generate a second batch of binary output values;
wherein the computer system is further configured to periodically retrain, using at least the second batch of binary output values and values of the first and second input parameters associated therewith, the parameter optimization module to generate a new optimized pair of input parameter values and a new list of training pairs of input parameter values,
   wherein the parameter optimization module comprises:
   a probabilistic machine learning model trained to model a relationship between the first controllable input parameter, the second controllable input parameter and the binary output value of the process, the relationship defining the optimized pair of input parameter values; and
   a batched binary Bayesian optimizer configured to generate, using the trained probabilistic machine learning model, the list of training pairs of input parameter values.

In an embodiment, the computer system may be configured to retrain the parameter optimization module using both the first batch of binary output values and values of the first and second input parameters associated therewith, and the second batch of binary output values and values of the first and second input parameters associated therewith.

In an embodiment, the probabilistic machine learning model of the parameter optimization module may be a Gaussian process.

In an embodiment, the Gaussian process may be a sparse variational Gaussian process and may have an integer number, M, of inducing points.

In an embodiment, M may be less than an integer number, N, of training samples used to train the Gaussian process during each retraining.

In an embodiment, M and N may satisfy M ≤ N/10.

In an embodiment, a total number of training pairs in the list is equal to Q, and M and Q may satisfy Q > M.

In an embodiment, the process module may be configured to assign the received requests to the first and second groups according to a predefined ratio, whereby a fraction of a total number of received requests assigned to the first group is approximately equal to P and a fraction of the total number of received requests assigned to the second group is approximately equal to 1 - P, where P > 1 - P.

In an embodiment, P may satisfy 0.65 ≤ P ≤ 0.95.

In an embodiment, P may satisfy 0.75 ≤ P ≤ 0.95.

In an embodiment, P may satisfy 0.80 ≤ P ≤ 0.90.

In an embodiment, the process module may be configured, when performing the process for a request assigned to the second group, to use an unused one of the plurality of training pairs of the list unless all of the plurality of training pairs have been used since the parameter optimization module was last retrained.

In an embodiment, to generate the list of training pairs of input parameter values, the batched binary Bayesian optimizer may be configured to: evaluate, using the trained probabilistic machine learning model, an acquisition function for a batch of candidate training pairs of input parameter values.

In an embodiment, to generate the list of training pairs of input parameter values, the batched binary Bayesian optimizer may be further configured to: determine gradients of the acquisition function with respect to the batch of candidate training pairs of input parameter values; and determine a revised batch of candidate training pairs of input parameter values based on the determined gradients.

In an embodiment, to generate the list of training pairs of input parameter values, the batched binary Bayesian optimizer may be further configured to: evaluate, using the trained probabilistic machine learning model, the acquisition function for the revised batch of candidate training pairs of input parameter values; determine, gradients of the acquisition function with respect to the revised batch of candidate training pairs of input parameter values; determine a further revised batch of candidate training pairs of input parameter values based on the determined gradients.

In an embodiment, to generate the list of training pairs of input parameter values, the batched binary Bayesian optimizer may be further configured to: iteratively repeat the steps of evaluating the acquisition function, determining gradients of the acquisition function, and determining a revised batch of candidate training pairs of input parameter values to optimize the acquisition function with respect to the batch of candidate training pairs of input parameter values; and output a revised batch of candidate training pairs of input parameter values of a final iteration as the list training pairs of input parameter values.

In an embodiment, the process may further have a third controllable input parameter. The parameter optimization module may further configured to output: an optimized parameter for the third controllable input parameter for use with the optimized pair of input parameter values; and for each training pair of the plurality of training pairs of the list, a value for the third controllable input parameter.

In an embodiment, the process is an audio sampling process performed on an audio signal. The first and second controllable input parameters may be controllable audio sampling parameters. The binary output value of the process may indicate whether a metric determined from the processed audio signal passes a threshold for the metric.

In an embodiment, the process may be a computer-aided manufacturing and quality control testing process for an article. The first and second controllable input parameters may be controllable input parameters of the manufacturing process. The binary output value of the process may indicate whether or not the article passed the quality control testing.

In an embodiment, the process may be an auction process for selling an article. The first and second controllable input parameters may be first and second pricing perturbation values for determining a reserve price of the article. The binary output value of the process may indicate whether or not the article sold at auction.

According to a second aspect, there is a computer-implemented method of performing a process having a binary output value, the method comprising:
receiving, at a process module, from a parameter optimization module:
   an optimized pair of input parameter values comprising an optimized value for a first input parameter of the process and an optimized value for a second input parameter of the process; and
   a list comprising a plurality of training pairs of input parameter values, each training pair comprising a value for the first input parameter and a value for the second input parameter;
receiving, at the process module, a plurality of requests to perform the process;
assigning, by the process module, a first plurality of the received requests to a first group for processing using the optimized pair of input parameter values;
assigning, by the process module, a second plurality of the received requests to a second group for processing using the training pairs of pairs of input parameter values;
performing, by the process module, the process on each request of the first group of requests using the optimized pair of input parameter values to generate a first batch of binary output values;
for each request of the second group of requests, performing, by the process module, the process on the request using one of the plurality of training pairs of input parameter values of the list to generate a second batch of binary output values; and
retraining the parameter optimization module using at least the second batch of binary output values and values of the first and second input parameters associated therewith, to generate a new optimized pair of input parameter values and a new list of training pairs of input parameter values,
wherein the parameter optimization module comprises:
   a probabilistic machine learning model trained to model a relationship between the first controllable input parameter, the second controllable input parameter and the binary output value of the process, the relationship defining the optimized pair of input parameter values; and
   a batched binary Bayesian Optimizer configured to generate, using the trained probabilistic machine learning model, the list of training pairs of input parameter values.

According to a third aspect, there is a computer-readable storage medium having code stored thereon which, when executed by a processor of a computer system, causes the computer system to perform the method of the second aspect.

According to a fourth aspect, there is a computer system comprising at least one processor and memory configured to implement a parameter optimization module for optimizing input parameters of a process having a binary output value, the parameter optimization module comprising:
a probabilistic machine learning model trained to model a relationship between at least a first controllable input parameter of the process, a second controllable input parameter of the process and the binary output value of the process, the relationship defining an optimized pair of input parameter values comprising an optimized value for the first input parameter and an optimized value for the second input parameter; and
a batched binary Bayesian Optimizer configured to generate, using the trained probabilistic machine learning model, a list comprising a plurality of training pairs of input parameter values, each training pair comprising a value for the first input parameter and a value for the second input parameter,
wherein the parameter optimization module is configured to output the optimized pair of input parameter values and the list of training pairs of input parameter values, and to receive binary output values of the process performed using the training pairs of input parameter values; and
wherein the computer system is configured to periodically retrain, using the received binary output values, and values of the first and second input parameters associated therewith, the parameter optimization module to generate a new optimized pair of input values and a new list of training pairs of input parameters.

In an embodiment, the parameter optimization module may be configured to receive binary output values of the process performed using both the training pairs of input parameter values and the optimized pair of input parameter values, and the computer system is configured to retrain the parameter optimization module using both the training pairs of input parameter values and the optimized pair of input parameter values.

In an embodiment, the probabilistic machine learning model of the parameter optimization module may be a Gaussian process.

In an embodiment, the Gaussian process may be a sparse variational Gaussian process and may have an integer number, M, of inducing points.

In an embodiment, M may be less than an integer number, N, of training samples used to train the Gaussian process during each retraining.

In an embodiment, M and N may satisfy M ≤ N/10.

In an embodiment, a total number of training pairs in the list is equal to Q, and wherein M and Q satisfy Q > M.

In an embodiment, to generate the list of training pairs of input parameter values, the batched binary Bayesian optimizer may be configured to: evaluate, using the trained probabilistic machine learning model, an acquisition function for a batch of candidate training pairs of input parameter values.

In an embodiment, to generate the list of training pairs of input parameter values, the batched binary Bayesian optimizer may be further configured to: determine gradients of the acquisition function with respect to the batch of candidate training pairs of input parameter values; and determine a revised batch of candidate training pairs of input parameter values based on the determined gradients.

In an embodiment, to generate the list of training pairs of input parameter values, the batched binary Bayesian optimizer may be further configured to: evaluate, using the trained probabilistic machine learning model, the acquisition function for the revised batch of candidate training pairs of input parameter values; determine, gradients of the acquisition function with respect to the revised batch of candidate training pairs of input parameter values; determine a further revised batch of candidate training pairs of input parameter values based on the determined gradients.

In an embodiment, to generate the list of training pairs of input parameter values, the batched binary Bayesian optimizer may be further configured to: iteratively repeat the steps of evaluating the acquisition function, determining gradients of the acquisition function, and determining a revised batch of candidate training pairs of input parameter values to optimize the acquisition function with respect to the batch of candidate training pairs of input parameter values; and output a revised batch of candidate training pairs of input parameter values of a final iteration as the list training pairs of input parameter values.

In an embodiment, the process may further have a third controllable input parameter. The parameter optimization module may further configured to output: an optimized parameter for the third controllable input parameter for use with the optimized pair of input parameter values; and for each training pair of the plurality of training pairs of the list, a value for the third controllable input parameter.

In an embodiment, the process is an audio sampling process performed on an audio signal. The first and second controllable input parameters may be controllable audio sampling parameters. The binary output value of the process may indicate whether a metric determined from the processed audio signal passes a threshold for the metric.

In an embodiment, the process may be a computer-aided manufacturing and quality control testing process for an article. The first and second controllable input parameters may be controllable input parameters of the manufacturing process. The binary output value of the process may indicate whether or not the article passed the quality control testing.

In an embodiment, the process may be an auction process for selling an article. The first and second controllable input parameters may be first and second pricing perturbation values for determining a reserve price of the article. The binary output value of the process may indicate whether or not the article sold at auction.

According to a fifth aspect, there is a method, operable on a computer system, for optimizing input parameters of a process having a binary output value, the computer system comprising:
a probabilistic machine learning model trained to model a relationship between at least a first controllable input parameter of the process, a second controllable input parameter of the process and the binary output value of the process, the relationship defining an optimized pair of input parameter values comprising an optimized value for the first input parameter and an optimized value for the second input parameter; and
a batched binary Bayesian Optimizer configured to generate, using the trained probabilistic machine learning model, a list comprising a plurality of training pairs of input parameter values, each training pair comprising a value for the first input parameter and a value for the second input parameter,
the method comprising:
   outputting the optimized pair of input parameter values and the list of training pairs of input parameter values;
   receiving binary output values of the process performed using the training pairs of input parameter values;
   retraining, using the received binary output values and values of the first and second input parameters associated therewith, the probabilistic machine learning module to generate a new optimized pair of input values; and
   generating, by the batched binary Bayesian Optimizer, using the retrained probabilistic machine learning model, a new list of training pairs of input parameters.

According to a sixth aspect, there is a computer-readable storage medium having code stored thereon which, when executed by a processor of a computer system, causes the computer system to perform the method of the fifth aspect.

The skilled person will appreciate that except where mutually exclusive, a feature described in relation to any one of the above aspects may be applied mutatis mutandis to any other. Furthermore, except where mutually exclusive, any feature described herein may be applied to any aspect and/or combined with any other feature described herein.

### BRIEF DESCRIPTION OF THE DRAWINGS

Non-limiting examples will now be described with reference to the following drawings:
FIG. 1 is a schematic illustration of a computer system for performing a process having a binary output value, including a parameter optimization module for optimizing controllable input values of the process;
FIG. 2A illustrates an example set of optimized input parameters output by the parameter optimization module;
FIG. 2B illustrates an example list of training parameter sets output by the parameter optimization module;
FIG. 3 is a schematic illustration of the parameter optimization module, showing additional detail;
FIG. 4A illustrates a surface representing an exemplary relationship between a binary output value of a process and two controllable input parameters as determined by the parameter optimization module;
FIG. 4B is a scatter plot of data points used to determine the relationship of FIG. 4A;
FIG. 5A is a scatter plot of data points following a subsequent training iteration to that of FIG. 4B;
FIG. 5B is a scatter plot of data points following a subsequent training iteration to that of FIG. 5A;
FIG. 5C is a scatter plot of data points following a subsequent training iteration to that of FIG. 5B;
FIG. 5D is a scatter plot of data points following a subsequent training iteration to that of FIG. 5C;
FIG. 6A illustrates a illustrates representing the relationship shown in FIG 4A, refined using the training iterations of FIGS. 5A-5D;
FIG. 6B is a scatter plot of data points used to determine the relationship of FIG. 5A;
FIG. 7 is a scatter plot illustrating the iterative revision of a set of candidate data points during batched Bayesian binary optimization;
FIG. 8 is a schematic illustration of a process flow for a first example of a process having a binary output value, in which the process includes sampling an audio signal and the controllable input parameters are audio sampling parameters;
FIG. 9 is a schematic illustration of a process flow for a second example of a process having a binary output value, in which the process includes manufacturing a component and the controllable input parameters are manufacturing process parameters;
FIG. 10 is a schematic illustration of a process flow for a third example of a process having a binary output value, in which the process includes an online auction and the controllable input parameters are reserve price perturbation parameters;
FIG. 11 is a flow chart illustrating a computer-implemented method of performing a process having a binary output value; and
FIG. 12 is a flow chart illustrating a computer-implemented method for optimizing input parameters of a process having a binary output value.

### DETAILED DESCRIPTION

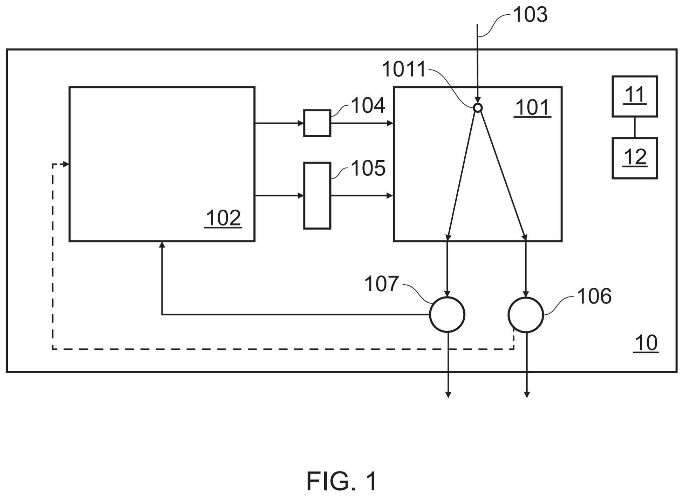

FIG. 1 schematically illustrates a computer system 10 for performing a process in response to requests 103, in accordance with aspects of the present disclosure. The computer system 10 includes at least one processor 11 coupled to memory 12, together configured to implement a process module 101 and a parameter optimization module 102.

The process module 101 receives requests 103 to perform a predefined process via a suitable communication interface. The requests 103 may be received via a network interface of the computer system 10 (e.g., over the Internet), via a user interface, or in any other suitable way.

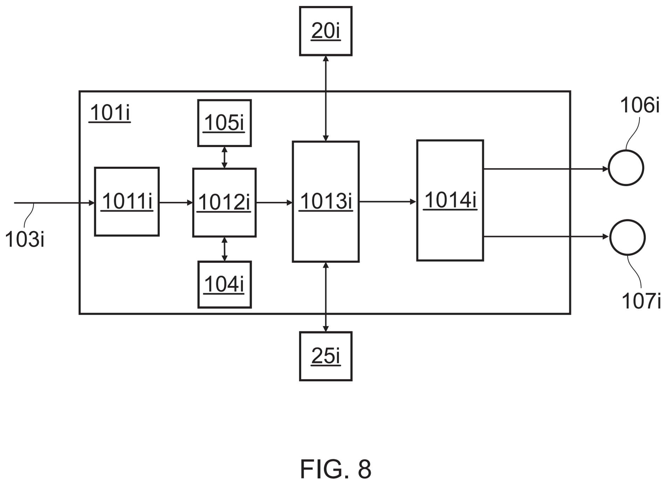

In general terms, the predefined process performed by the process module 101 has a binary output value (i.e., there are only two possible output values, e.g., 1 or 0), and the process module 101 performs the process using two or more input parameters whose values are adjustable, independent of the content of the request 103, and whose values influence the binary output value. The predefined process implemented by the process module 101 may take many different forms and, for this reason, no further specific details will be described with reference to FIG. 1. Specific, non-limiting, examples of processes which may be implemented by the process module 101 are described with reference to FIGS. 8-10.

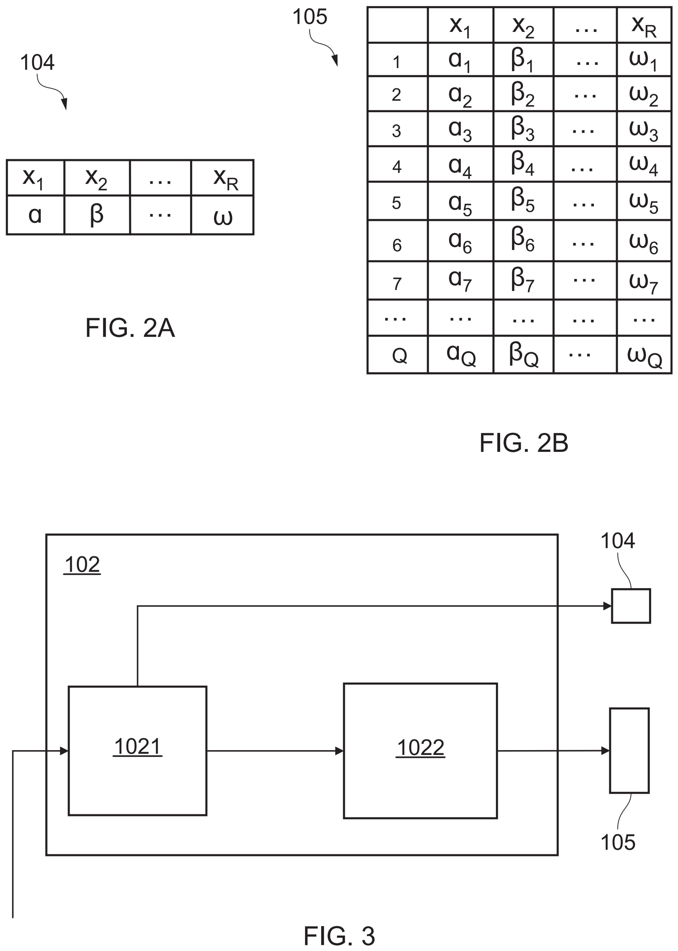

The arrangement and operation of the parameter optimization module 102 will be described in more detail below with reference to FIGS. 3-7. For the purposes of FIG. 1 it is sufficient to say that the parameter optimization module 102 outputs, to the process module 101, an optimized set of input parameter values 104 and a list 105 comprising a plurality (e.g., an integer number Q) of sets of training input parameter values. The process module 101 may, e.g., store the input parameter values 105 and the list 105 in memory and obtain a set of parameter values from the memory in response to receiving a request 103, as detailed below.

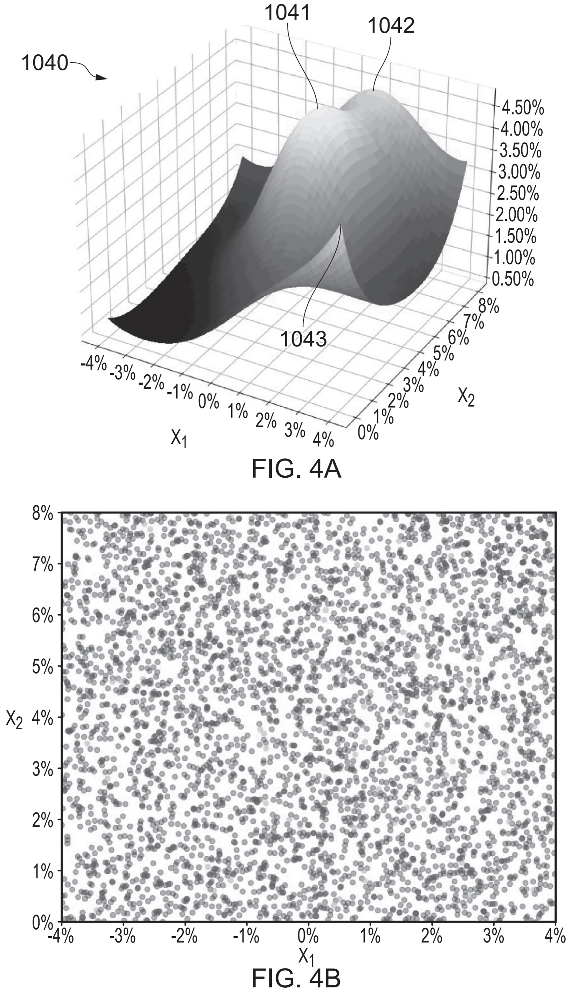

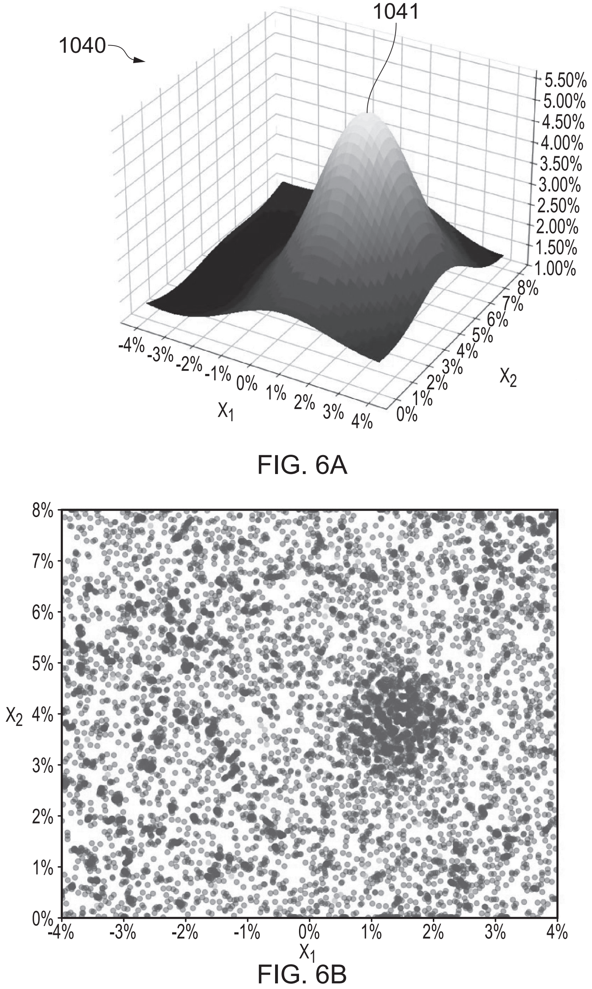

Referring to FIG 2A, the optimized set of input parameter values 104 includes, for each of the R input parameters (x₁, x₂, ... x_{R}) of the process implemented by the process module 101, a single value (a, β, ..., ω). The optimized set of parameters 104 is the combination of values of the R input parameters that has, at a previous time, based on a previously available data set, been determined by the parameter optimization module 102 to maximize the probability that the output of the process will return a desired binary value (e.g., without loss of generality, an output value of 1). Briefly referring to FIGS. 4A and 6A, the optimized set of input parameter values 104 may be the combination of parameter values for the R parameters corresponding to a maxima 1041 on a surface 1040 determined by the parameter optimization module 102. In the example of FIGS. 4A and 6A, the process has two input parameters, i.e., R = 2, such that the optimized set of input parameter values 104 includes a pair of values, one for each of the first and second input parameters (x₁, x₂).

Referring to FIG. 2B, the list 105 has an integer number, Q, of entries, each entry represented in FIG. 2B by a row numbered 1 to Q. Each entry comprises one value for each of the R input parameters (x₁, x₂, ... x_{R}) of the process. Thus, for the first entry there are R values (α₁, β₁, ..., ω₁), for the second entry there are R values (α₂, β₂, ..., ω₂), and so forth up to the final, Q-th, entry. In contrast to the R values of the optimized set of parameters 104, the R values of each of the Q entries of the list 105 is a combination of values to be used as a training input of the process. In other words, the sets of parameters in the list 105 are to be used as input parameters so that the resulting binary output can be evaluated and used, at a future time, to retrain the parameter optimization module 102 to identify a new optimized set of parameters 104. Briefly referring to FIG. 4B, which illustrates a two-dimensional parameter space, the parameter optimization module 102 may identify, using a batched binary Bayesian optimization (BO), the Q most useful combinations of the parameter values in the R-dimensional parameter space for future retraining of the parameter optimization module 102 and select these for inclusion in the list 105. As before, in this example the process has two input parameters, i.e., R = 2, such that the list 105 would comprise, for each of the Q entries of the list 105, a pair of values, one for each of the first and second input parameters.

As indicated by node 1011, when the process module 101 receives a request 103, it first assigns the request to one of two possible groups:
- A first group, for which the process will be performed using the optimized set of parameters 104. Thus, for the first group, the process module 101 uses the values for the input parameters that are, to the best knowledge of the system 10, most likely to result in the desired outcome (e.g., a binary output value of 1).
- Asecond group, for which the process will be performed using one of the plurality of sets of values of the list 105, i.e., the values contained in one entry, or row, of the list 105. Thus, for the second group, the process module 101 does not select the values most likely to result in the desired outcome (e.g., a binary output value of 1), but obtains results useful when retraining the parameter optimization module 102 to refine and update the values of the optimized set of parameters 104.

In some examples, the process module 101 may assign requests 103 to the two groups randomly (e.g., using the output of a random number generator). In other examples, however, the process module 101 assigns the requests 103 so that a greater fraction of incoming requests 103 are assigned to the first group than the second group. In other words, when considering a suitably large sample size of requests 103, a fraction of a total number of received requests 103 assigned to the first group is approximately equal to a predefined fraction P and a fraction of the total number of received requests assigned to the second group is approximately equal to 1 - P, where P > 1 - P. In a specific example, P = 0.85, but more generally the value of P may be selected to be in the range 0.65 ≤ P ≤ 0.95, 0.75 ≤ P ≤ 0.95 or 0.80 ≤ P ≤ 0.90.

For requests 103 assigned to the second group, the process module 101 may select a previously unused one of plurality of training sets of input parameter values of the list 105, if one exists. By "previously unused", it is meant that the combination of values of the entry has not be used to process a request 103 in the time since the parameter optimization module 102 was last retrained. To this end, the process module 101 may keep track of which of the training sets of input parameter values of the list 105 have been used. In some examples, the list 105 may be ordered such that most useful set of training input parameter values, as determined by the parameter optimization module 102, is used for the first request assigned to the second group, the second most useful set of training input parameter values is used for the second request assigned to the second group, and so forth.

If all of the sets of input parameter values of the list 105 have already been used, the process module 101 may start again from the top of the list 105 (i.e., select the first row of the list 105), or may randomly select a training set from the list 105. In other examples, the process module 101 may re-assign the request from the second group to the first group and/or assign all future requests 103 to the first group until the parameter optimization module 102 has been retrained and a new list 105 generated.

Each time a request 103 is processed by the process module 101, the output value is stored along with the values of the input parameters associated therewith, i.e., the values of the R input parameters which resulted in the output. Outputs resulting from processing requests assigned to the first group results in a first batch of output values 106. Outputs resulting from processing requests assigned to the second group results in a second batch of output values 107.

Periodically, the computer system 10 initiates retraining of the parameter optimization module 102 to generate a new optimized set of input parameter values 104 and a new list 105 of training input parameter values for output to the process module 101. The term "periodically" includes, but is not limited to, retraining the parameter optimization module 102 after a pre-defined length of time (e.g., 24 hours) elapses or at a particular time of the day (e.g., midnight). It also includes, but is not limited to, retraining the parameter optimization module 102 after a pre-defined number of requests have been received and processed (e.g., every 1000 processed requests) or after a pre-defined number of requests assigned to the second group have been processed (e.g., after R requests in the second group have been processed, where R is the number of sets of input parameter values in the list 105). It also includes, but is not limited to, retraining the parameter optimization module 102 at the initiation of an operator of the system 10, for example during system maintenance.

The parameter optimization module 102 is retrained using at least the second batch of binary output values 107 and the values of the input parameter values associated therewith. Thus, the retraining utilizes at least those data points deemed most useful by the batched binary Bayesian optimization (BO) process when the parameter optimization module 102 was last retrained. In some examples, the retraining also utilizes some or all of the first batch of binary output values 106 and the values of the input parameter values associated therewith which, it will be understood, are the optimized set of input parameter values 104.

The retraining of the parameter optimization module 102 may also utilize some or all of the data points used in one or more previous rounds of training. As will be discussed in more detail below, the computational complexity, and thus time, associated with retraining the parameter optimization module 102 increases with the number of data points used in the retraining. Thus, it may be desirable to limit, or trim, the training set to avoid the computational complexity increasing beyond a given level. For example, the retraining may only utilize data points obtained within the last five, ten, fifteen, or twenty training cycles.

### Parameter Optimization Module

Referring now to FIG. 3, this schematically illustrates the parameter optimization module 102 in more detail. The parameter optimization module 102 includes a probabilistic machine learning (ML) model 1021, for example a Gaussian process, an output of which is the optimized set of input parameter values 104. The parameter optimization module 102 further includes a batched binary Bayesian optimizer (BO) 1022, an output of which is the list 105 of sets of training input parameter values. As discussed in more detail below, the batched binary BO 1022 uses the trained ML model 1021 as a tool to evaluate an acquisition function for batches of candidate sets of training parameter values, and for this reason the ML model 1021 is shown as input of the batched binary BO 1022.

The probabilistic ML model 1021 receives, as an input, a training data set that includes, for each training data point of the training data set, a set of R input parameter values and an associated binary output value of the process implemented by the process module 101. Based on the training data set, the probabilistic ML model 1021 numerically determines a relationship between the combination of the R input parameters and the probability the resulting binary output will be equal to one of the two values (e.g., the desired value of 1). As noted above, the probabilistic ML model 1021 may be a Gaussian process. Gaussian processes, and their use in modelling relationships between input parameters and an output, are well-known to those skilled in the art and will not be described in further detail, other than in the context of the batched binary Bayesian optimizer 1022, discussed below.

Referring to FIG. 4A, the relationship between the binary output and the input parameter values may be represented by a surface 1040 in the parameter space (x₁, x₂). Each point, y(x₁, x₂), on the surface 1040 is, or is representative of, the probability that the output of the process will be equal to 1 for a corresponding combination of input parameter values, x₁, x₂. The optimal combination of the parameters x₁, x₂, corresponding to output 104, is, generally, that corresponding to the highest maxima 1041 of the surface 1040.

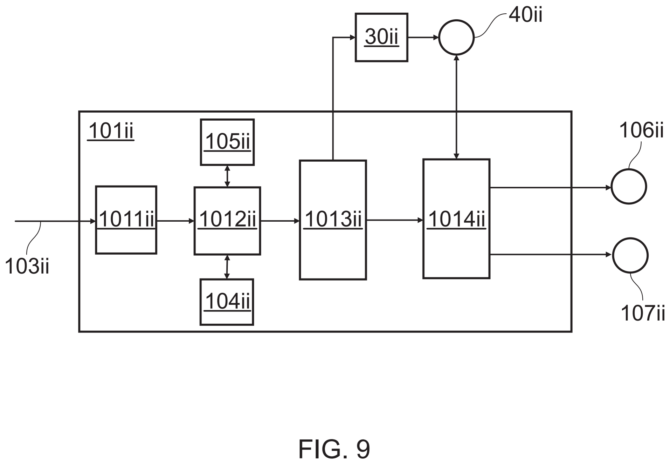

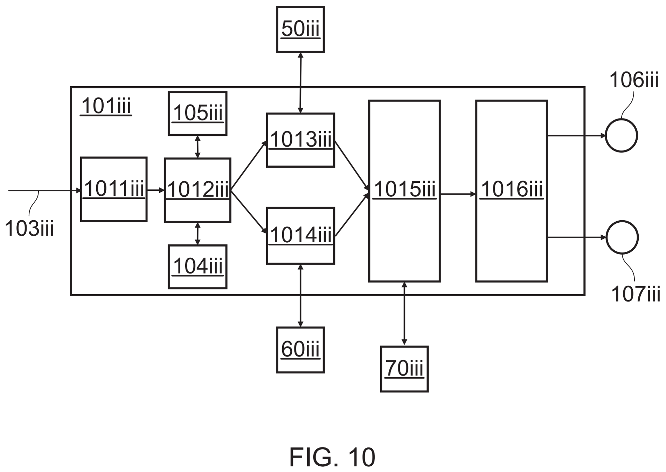

Where the surface 1040 has more than one maxima having an identical or very similar value of y(x₁, x₂), the parameter optimization module 102 may utilize a secondary metric to select one of the identified maxima. For example, when performing the process, the process module 101 may record (e.g., store in memory) both the binary output value and a value for a secondary metric value (e.g., the integrated signal convolution metric described with reference to FIG. 8, the surface roughness value described with reference to FIG. 9, or the auction sale value described with reference to FIG. 10). When selecting a maxima from amongst two or more identical or similar maxima, the maxima having, e.g., the highest value for the secondary metric may be used. In one group of examples, the parameter optimization module 102 comprises two probabilistic ML models: a first for the binary value (i.e., ML model 1021) and a second for the secondary metric. Having identified multiple maxima in the first trained ML model 1021, the parameter optimization module 102 may evaluate the second trained ML model for the input parameter values x₁, x₂ of each identified maxima and select the maxima with the highest value for the second ML model. In another group of examples, the parameter optimization module 102 may select the maxima based on an exploration level centred about the location of each of the maxima. For example, the parameter optimization module 102 may select the maxima that has a highest number of evaluated data points within a predefined distance, measured in the R-dimensional parameter space, of the maxima.

FIG. 4A illustrates the result of an initial (e.g., first) training of the ML model 1021. In order to train the probabilistic ML model 1021 for the first time, an initial training data set is required. An initial training data set may be generated in any suitable fashion, and one example is illustrated by the scatter plot of FIG. 4B, which shows the data used to train the ML model 1021 in FIG. 4A. To generate the initial training data set, an operator of the system 10 may first select a bounded region of the entire (e.g., infinite) parameter space that is of interest, for example a region of the parameter space that the operator knows to be technically sensible in the context of the process (i.e., a region of the parameter space that excludes combinations of parameters that the operator knows will not, realistically, result in the desired binary output). This region of interest is illustrated in FIG. 4B by the bounded region of x₁, x₂, shown, in this non-limiting example, to have a range [-4%, +4%] in the x₁-direction and [0%, 8%] in the x₂-direction. Having done so, a number of points (e.g., 1000 data points) that cover the selected region of the parameter space may be selected to create a list. The process module 101 may then perform the process for each of the selected data points of the list to generate the initial training data set. In the example of FIG. 4B, the data points have been selected randomly to cover the parameter space. In another example, having selected a value for the number of points (e.g., 1000), data points are selected that are evenly distributed and uniformly cover the region of interest.

As can be seen from FIG. 4A, while there is a maxima 1041 on the surface 1040 resulting from the initial training of the ML model 1021, there is some uncertainty in the location of the true optimal set of parameters 104. For example, the probability distribution surface 1040 appears to be increasing towards other maxima at or around locations labelled 1042, 1043, and it possible that these locations may be the true, highest maxima on the surface 1040. In view of this, and in view of the possibility that some processes may have a time dependency that could shift the location of the maxima 1041, it is desirable to retrain the ML model 1021 when more training data becomes available, to refine and update the surface 1040 and thus refine and update the optimized set of input parameter values 104.

In principle, the ML model 1021 may be retrained using the outputs from training data points that, as with the initial data set, are randomly selected or selected to uniformly cover the parameter space. However, such approaches are sub-optimal and inefficient ways of searching the parameter space, and may result in low usage of the optimal parameters 104 by the process module 101 and/or limited refinement of the surface 1040 when the ML model 1021 is retrained. According to the present disclosure, subsequent iterations utilize the batched binary Bayesian optimizer 1022 to generate the list 105 for each iteration.

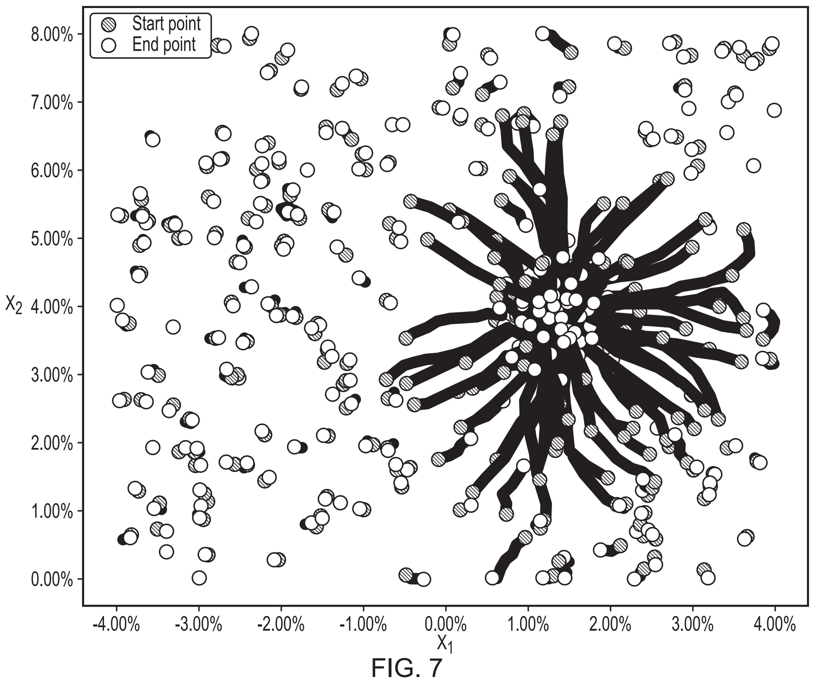

To generate the list 105 of training data points, an initial batch of candidate data points are selected, for example generated randomly. The batched binary Bayesian optimizer 1022 then evaluates, for the initial batch of candidate data points, an acquisition function, by evaluating the output distribution of the trained ML model 1021 for the batch of data points. The batched binary BO 1022 then computes gradients of the acquisition function with respect to the point locations, and moves each of the data points of the batch a small step in the direction of its computed gradient to generate a revised batch of candidate data points. The batched binary BO 1022 repeats this process iteratively until the acquisition function is optimised with respect to the revised batch of data points, and outputs this revised batch of points as the list 105 of training pairs of input parameter values. This is illustrated in FIG. 7 for one training iteration. Evaluation of the acquisition function is described in more detail below.

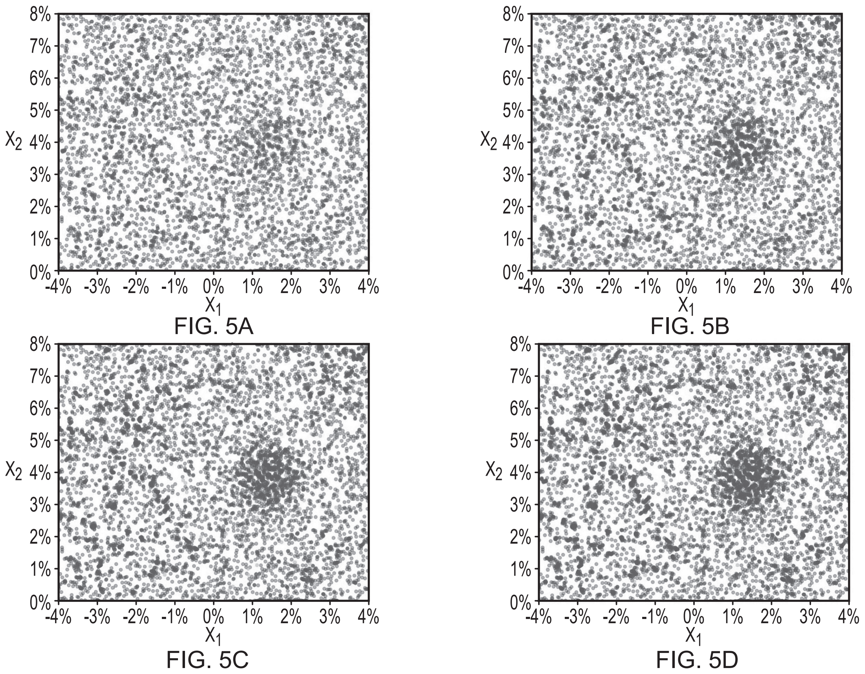

FIGS. 5A-5D are scatter plots that illustrate successive rounds of training of the ML model 1021 followed by selection of lists 105 of input training parameter values by the batched binary BO 1022. Specifically, FIG. 5A is the scatter plot of data points used in the second round of training of the ML model 1021. Thus, the difference between the scatter plot of FIG. 5A and the scatter plot of FIG. 4B is the list 105 of input parameter values generated by the batched binary BO 1022 following the initial round of training. Similarly, FIG. 5B is the scatter plot of data points used in the third round of training of the ML model 1021, and thus the difference between the scatter plot of FIG. 5B and the scatter plot of FIG. 5A is the list 105 of input parameter values generated by the batched binary BO 1022 following the second round of training. Likewise, the difference between the scatter plot of FIG. 5C and the scatter plot of FIG. 5B is the list 105 of input parameter values generated by the batched binary BO 1022 following the third round of training, and the difference between the scatter plot of FIG. 5D and the scatter plot of FIG. 5C is the list 105 of input parameter values generated by the batched binary BO 1022 following the fourth round of training.

By comparing the scatter plots, it can be seen that the batched binary BO 1022 is not selecting data points that search the parameter space randomly or uniformly. Instead, through the iterative process that optimises the acquisition function, the batched binary BO 1022 selects a list of Q data points whose evaluation, via the process module 101, most efficiently and effectively refines the ML model 1021 when it next trained. FIG. 6A illustrates the trained ML model 1021 following the a final, fifth round of training, with the corresponding scatter plot shown in FIG. 6B. Comparing the surface 1040 of FIG. 6A with the surface 1040 of FIG. 4A, it can be seen that the uncertainty in the location of the true optimal input parameter values 104 is much reduced, with exploration around the locations 1042, 1043 as well the location 1041 confirming 1041 to be true maxima.

### Acquisition Function and Determination of the Covariance Matrix

The process implemented by the process module 101 may be considered a black-box function, which can be denoted *f(x).* One of the aims of the parameter optimization module 102 is to find the global maximiser of the function *f*, which can be denoted as *x*:* ${x}^{∗} = arg max f \left(x\right)$ $x ∈ χ$ $χ ⊆ {ℝ}^{d}$ for some (possibly bounded) input space *χ.* The probabilistic ML model 1021, which for the purposes of explanation will be assumed to be a Gaussian process, is used to model the function *f*(*x*) based on input-output observation pairs (i.e., values of the R controllable input parameters and the binary output value), which may be denoted: $D = {\left\{{x}_{i}, {y}_{i}\right\}}_{i = 1}^{N}$ ${y}_{i} = f \left({x}_{i}\right)$

Armed with the posterior distribution of the model over the function *p*(*f* | *D),* an acquisition function can be defined over the same space of inputs that trades off the need explore uncertain regions of the space with the need to exploit known areas of high function value. **In** general, to perform a step in a Bayesian optimization, the acquisition function is optimized to select the next input at which to evaluate the expensive black-box function, *f*(*x*)*.* **The** new observation is then appended to the collection and the process is repeated until some measure of convergence is satisfied.

A common acquisition function is the upper credible bound (UCB), sometimes called the upper confidence bound, introduced by Auer in the paper "Using Confidence Bounds for Exploitation Trade-offs", Journal of Machine Learning Research 3 (2002) 397-422. The UCB acquisition function, *UCB_{β}*(*x*)*,* is defined as: $\begin{matrix}{UCB}_{β} \left(x\right) = E \left[f\left(x\right)\right] + {\left(βV\left[f\left(x\right)\right]\right)}^{\frac{1}{2}} \\ = {μ}_{f} + {β}^{\frac{1}{2}} {σ}_{f}\end{matrix}$ $β ∈ {ℝ}^{+}$ Here, *β* is a parameter that tunes the explore-exploit trade-off. For small values of *β* the acquisition function is large only when the predictive mean is large, indicating a dominance of exploitative behaviour. Conversely, when *β* is very high we have a large acquisition function when the predictive variance (uncertainty) is large, indicating a preference towards exploration.

Where the black-box function has only binary outcomes, i.e., y ∈ (0, 1), the way in which the binary outcome depends on the black-box function is described by: $p \left(y=1\left|x, f\right.\right) = Φ \left(f\left(x\right)\right)$ where *Φ* represents the standard Gaussian cumulative density function, and the goal is, by the monotonicity of *Φ*, the maximization of the probability surface: ${x}^{∗} = arg max Φ \left(f\left(x\right)\right)$ $x ∈ χ$

For a surrogate model, a Bernoulli likelihood map from the continuous black-box function space to the binary observation space may be used, and represents our beliefs underlying the probability surface with the posterior predictive distribution: $p \left(y=1\left|x, D\right.\right) = {E}_{p \left(f\left|D\right.\right)} \left[Φ\left(f\left(x\right)\right)\right]$ where p(f | *D)* is the posterior distribution over the black-bock function.

In the computer system 10 described above with reference to FIGS. 1-3, the list 105 contains a plurality, Q, of entries. This requires that we evaluate not just one point but a whole batch of points in parallel. Thus, it is necessary to modify the acquisition functions so that they can jointly evaluate a set of points. Wilson et al, in the paper "Maximizing acquisition functions for Bayesian optimization", Advances in Neural Information Processing Systems 31, 2018, show that many commonly used acquisition functions can be rewritten as integrals with respect to the posterior over the black-box function. The integral forms can naturally be parallelized and, using the reparameterization trick described by Kingma and Welling in the paper "Auto-Encoding Variational Bayes", International Conference on Learning Representations, 20 December 2013, they can be unbiasedly estimated via Monte Carlo integration and optimized via gradient methods. For the UCB acquisition function, *UCB_{β}*(*x*)*,* this univariate integral is given by, when reparametrized in terms of a standard Gaussian random variable z: ${UCB}_{β} \left(x\right) = {μ}_{f} + {β}^{\frac{1}{2}} {σ}_{f} = {\int }_{- ∞}^{+ ∞} \left({μ}_{f}+\left|{\hat{σ}}_{f}z\right|N\left(z; 0; 1\right)dz\right.$ $\hat{σ} = {\left(\frac{βπ}{2}\right)}^{1 / 2} σ$

The above equation may then be extended to a batch setting as q-UCB: $q - {UCB}_{β} \left(X\right) = {\int }_{- ∞}^{+ ∞} max \left({μ}_{f}+\left|{\hat{L}}_{f}z\right|\right) N \left(z; 0; I\right) d z$ $X ∈ {ℝ}^{qxd}$ $\hat{L} = {\left(\frac{βπ}{2}\right)}^{1 / 2} L$ Here, X corresponds to a batch of q candidate inputs, µ_{f} is the posterior mean vector of the latent function evaluated at the batch of inputs, ***L̂***, and **L_{f}** is the lower triangular Cholesky factor of the posterior covariance matrix of the latent function evaluated at the batch of inputs. Since the integral is intractable, we estimate it as a Monte Carlo integral, which is amenable to gradient-based optimization thanks to the reparameterization in terms of z: $q - {UCB}_{β} \left(X\right) ≃ \frac{1}{K} {\sum }_{k = 1}^{K} max \left({μ}_{f}+\left|{\hat{L}}_{f}{z}^{\left(k\right)}\right|\right)$ for *z*^{(*k*)}*~N*(*O,I*)

For the purposes batched binary Bayesian optimization, we may alternatively choose to use the variant acquisition function, Φ-UCB, introduced by Fauvel and Chalk in the paper "Efficient exploration in binary and preferential Bayesian optimization", 2021: $\begin{matrix}Φ - {UCB}_{β} \left(x\right) = E \left[Φ\left(f\left(x\right)\right)\right] + {\left(βV\left[Φ\left(f\left(x\right)\right)\right]\right)}^{1 / 2} \\ = {μ}_{Φ} + {β}^{1 / 2} {σ}_{Φ}\end{matrix}$ This may offer superior performance for binary observations based on posterior beliefs over the latent probability surface (i.e., the latent function having been 'squashed' through Φ). Intuitively, it is an improvement because, while both acquisition functions are unaffected by aleatoric uncertainty, Φ-UCB down-weights high epistemic uncertainty when the posterior mean of the latent function is far from zero. For example, a variance of ± 2.0 around a mean of 20 corresponds to a much smaller variance after squashing than if the mean were 0 prior to squashing - this reflects our interests more faithfully since we are interested in uncertainty over the probability surface rather than the black-box function directly.

Starting from the equation for Φ-UCB, we re-write it integral form: $\begin{matrix}Φ - {UCB}_{β} \left(x\right) = {μ}_{Φ} + {β}^{1 / 2} {σ}_{Φ} \\ = {\int }_{- ∞}^{+ ∞} \left({μ}_{Φ}+\left|{\hat{σ}}_{Φ}z\right|\right) N \left(z; 0; 1\right) dz\end{matrix}$ We then parallelize it to define our new acquisition function: $\begin{matrix}qΦ - {UCB}_{β} \left(X\right) = {\int }_{- ∞}^{+ ∞} max \left({μ}_{Φ}+\left|{\hat{L}}_{Φ}z\right|\right) N \left(z; 0; I\right) d z \\ ≃ \frac{1}{K} {\sum }_{k = 1}^{K} max \left({μ}_{Φ}+\left|{\hat{L}}_{Φ}{z}^{\left(k\right)}\right|\right)\end{matrix}$ for *z*^{(*k*)}*~N*(*O, I*)
Here, if f is the random vector representing the black-box function evaluated at the candidate batch of inputs, *µ*_{Φ} is the mean of the (elementwise) squashed random vector Φ(f), i.e., $E \left[Φ\left(f\right)\right]$, and: ${\hat{L}}_{Φ} {\hat{L}}_{Φ}^{T} = \frac{βπ}{2} {Σ}_{Φ}$ where *Σ*_{Φ} is the covariance matrix of Φ(f). Assuming we know ***µ***_{f} and ***Σ***_{f} from the posterior distribution of our surrogate mode, the i-th element of *µ*_{Φ} is written in closed form as: ${μ}_{{Φ}_{i}} = Φ \left(\frac{{μ}_{{f}_{i}}}{\sqrt{1 + {Σ}_{{f}_{ii}}}}\right)$ Element *ij* of *Σ*_{Φ} represents the covariance between elements *i* and *j* of Φ(f), defined as: $\begin{matrix}{Σ}_{{Φ}_{ij}} = E \left[Φ\left({f}_{i}\right)Φ\left({f}_{j}\right)\right] - E \left[Φ\left({f}_{i}\right)E\left[Φ\left({f}_{j}\right)\right]\right] \\ = {\int }_{- ∞}^{+ ∞} {\int }_{- ∞}^{+ ∞} Φ \left({f}_{i}\right) Φ \left({f}_{j}\right) N \left(\left(\begin{matrix}{f}_{i} \\ {f}_{j}\end{matrix}\right); \left(\begin{matrix}{μ}_{{f}_{i}} \\ {μ}_{{f}_{j}}\end{matrix}\right); \left(\begin{matrix}{Σ}_{{f}_{ii}} & {Σ}_{{f}_{ij}} \\ {Σ}_{{f}_{ji}} & {Σ}_{{f}_{jj}}\end{matrix}\right)\right) {df}_{1} {df}_{2} - {μ}_{{Φ}_{i}} {μ}_{{Φ}_{j}}\end{matrix}$ There is no known solution to the first term, so we use a Monte Carlo estimation of *Σ*_{Φ}, ensuring the samples are obtained via the reparameterization trick: ${Σ}_{{Φ}_{ij}} ≃ \frac{{\sum }_{k = 1}^{K} \left(Φ\left({f}_{i}^{\left(k\right)}\right)-\overline{Φ}\left({f}_{i}\right)\right) \left(Φ\left({f}_{j}^{\left(k\right)}\right)-\overline{Φ}\left({f}_{j}\right)\right)}{K - 1}$ ${f}^{\left(k\right)} ∼ N \left(f; {μ}_{f}; {Σ}_{f}\right)$ $\overline{Φ} \left({f}_{i}\right) = \frac{1}{K} {\sum }_{k = 1}^{K} Φ \left({f}^{\left(k\right)}\right)$ Here, ${f}_{i}^{\left(k\right)}$ and ${f}_{j}^{\left(k\right)}$ are elements *i and j* of the k-th sample *f*^{(*k*)} and Φ̅(*fᵢ*) is the sample mean. From this estimate of the components of the covariance matrix, an estimate the acquisition function may be evaluated. As discussed above, the batched binary Bayesian optimizer 1022 determines, through an iterative process of evaluating the acquisition function, determining gradients and refining data point locations using the gradient, a batch of input parameter value sets that form the list 105. As noted above, the iterative revision of an initial candidate batch of data points to generate a list 105 is shown, for one training round, in FIG. 7. The thick black lines illustrate the movement of the data points from their initial (e.g., randomly generated) locations in the parameter space to their final locations.

### Interaction Between ML Model, Batched Binary BO and Process Performance

If the probability surface (e.g., surface 1040 in FIGS. 4A and 6A) determined by the ML model 1021 is to be an accurate representation of the black-box function equivalent to the process performed by the process module 101, the N points used to train to the ML model 1021 need to usefully cover the input parameter space. Conventionally, i.e., without using the batched binary Bayesian optimization technique described herein, this may require training data to be captured that covers the parameter space uniformly. The number of data points required to uniformly cover a parameter space will generally increase exponentially with number of parameters, R. Even for a relatively small number of parameters, e.g., R = 2, this may mean performing a process a very large number of times to obtain training data suitable for usefully retraining the model 1021. In practice, this could mean, e.g., manufacturing a very large number of components that do not pass a quality control test in order to obtain suitable training data.

At the same time, a drawback of the probabilistic machine learning model 1021 is that the computational complexity, and thus time, associated within training the model increases significantly as the number of data points, N, used to train the model increases. This is particularly true of a Gaussian process, where the computational complexity increases as O(N³) (i.e., the order of N³). Thus, even if the process can be performed a large enough number of times to obtain suitable training data, the computational resources required to train the model 1021 may be impracticably high, for example if the model 1021 is to be retrained each day such that the available time for training is relatively limited.

The approach described herein, utilizing batched binary Bayesian optimization to create, for each training iteration, a list 105 of sets of training input parameter values, creates a much smaller training data set that still effectively covers the parameter space. Indeed, the batched binary Bayesian optimization selects those combinations of training parameters that will have the greatest impact when the model 1021 is next retrained, including data points allocated to the peak 1041 of the probability surface 1040 and data points that explore the rest of the parameter space (e.g., locations 1042, 1043) to ensure that an identified peak 1041 is, in fact, the highest peak of the surface 1040. In practice, this may have a number of advantages. These may include:
- The number of training data points required to achieve a given improvement in the output of the model 1021 may be reduced, which may reduce the computational requirements associated with retraining the model, especially where a Gaussian process is used. Conversely, if a predefined number, e.g., Q, or a predefined ratio of a total number of received requests, 1 - P, are to allocated to the generation of training data, the expected improvement in the output of the model 1021 may be improved as compared to random and uniform exploration of the parameter space.
- The number of times the process needs to be performed to achieve the given improvement in the output of the model 1021 may be reduced. Consequently, the number of, e.g., manufactured components that are expected to fail a quality control process due to the use of sub-optimal input parameter values may be reduced.
- The number of times a process can be performed each day, and/or the number of requests that will be received in a day, will generally be limited. Where this is the case, the approach described herein, in which the process module allocates some requests to the first group and some requests to the second group, may only be feasible if useful training data is generated more efficiently than would be the case where the parameter space is searched randomly and uniformly. This may be achieved using the batched binary Bayesian optimization.
- By making this feasible, the computer system 10 may be operated in a mode which is 'live' in that it operates, mostly, using optimized input parameter values 104 that produce desired results, yet still produces new, useful, training data points for refining and updating the optimized parameters values 104.

In some examples, the probabilistic machine learning model 1021 is implemented using a standard Gaussian process. However, the computational requirements, and thus time, associated with training and retraining the model 1021 may be reduced further by instead using a sparse variational Gaussian process. The computational complexity of a stochastic gradient descent step for a sparse variational Gaussian process scales as OM³, where M is the number of inducing points used in the sparse variational Gaussian process and may be a fixed (e.g., predefined) value and M < N. The use of a sparse variational Gaussian process may combine synergistically with the use of the batched binary BO 1022, as it may relax an implicit limitation on the value of Q (i.e., the number of sets of training input parameter values in the list 105 output by the batched binary BO). For completeness, it is noted that if the number of points in a training minibatch, B, is larger than the number of inducing points, M, then the computation complexity scales as OM²B, rather than OM³.

In one group of examples, the number, Q, of sets of training input parameter values in the list 105 may be selected to be greater than the number of inducing points, i.e., Q > M. In another group of examples, the number of inducing points, M, may be selected to be relatively small compared to a total number of points, N, used to retrain the ML model 1021, again noting that N may be limited to limit to computational complexity of the retraining process, e.g., by trimming N to a predefined maximum value and/or limiting the maximum age of training data used in each training iteration. For example, M ≤ N/10. In some examples, the value of M may be in the range 64 ≤ M ≤ 2056, in the range 128 ≤ M ≤ 1024, and may, for example, may be equal to about 256. Generally, the M inducing points are selected to summarize the N datapoints, and may be selected randomly within the selected region of the parameter space, or freely optimized via gradient descent of a variational objective function (the 'evidence lower bound' or 'ELBO').

### Example Processes

As noted previously, the predefined process implemented by the process module 101 of the computer system 10 may take many different forms. Three non-limiting examples are illustrated in FIGS. 8-10, each of which shows, in the form of a schematic process flow, an implementation of the process module 101.

Referring first to FIG.8 , the process performed by the process module 101i may be the capture and sampling of an audio signal in response to a request 103i. The controllable input parameters of the audio sampling process may be, for example, a sampling rate and a bit depth. The binary output value may indicate whether a resulting parameter or metric of the sampled audio signal meets one or more criteria, for example passes a threshold. In one example, the process module 101i performs a convolution between the input audio signal and the sampled audio signal and compares the result to a threshold.

In more detail, a group allocation module 1011i of the process module 101i receives a request 103i to process an audio signal and allocates the request to one of a first group or a second group. In one example, the group allocation module 1011i allocates a predefined fraction, P, of all the requests it receives to the first group and allocates a remaining fraction, 1 - P, the second group, where P > 1 - P. In a specific example, P = 0.85, but more generally the value of P may be selected to be in the range 0.65 ≤ P ≤ 0.95, 0.75 ≤ P ≤ 0.95 or 0.80 ≤ P ≤ 0.90.

The group allocation module 1011i forwards the allocation to a parameter selection module 1012i. The parameter selection module 1012i then selects, based on which one of the groups the request has been allocated to, a pair of values for the sampling rate and bit depth to use when performing the audio sampling process. If the request 103i was allocated to the first group, the parameter selection module 1012i selects an optimized pair of sampling rate and bit depth values 104i, which may be stored in memory having been previously received from the parameter optimization module 102. If the request 103i was instead allocated to the second group, the parameter selection module 1012i selects one pair of sampling rate and bit depth values from the list 105i of training pairs, which may be stored in memory having been previously received from the parameter optimization module 102. As noted previously, the parameter selection module 1012i may select a unused pair of training values, if one is available.

The parameter selection module 1012i forwards the selected values of the sampling rate and bit depth to an audio capture and sampling module 1013i. The audio capture and sampling module 1013i interfaces with a microphone 20i which, in response an instruction from the audio capture and sampling module 1013i, records a sound from an environment and provides the audio signal to the audio capture and sampling module 1013i. The audio capture and sampling module 1013i then digitally samples the audio signal using the values of the sampling rate and bit depth received from the parameter selection module 1012i. In one example, the audio capture and sampling module 1013i stores the sampled audio signal 25i in external memory, as an output for the originator of the request 103i.

The audio capture and sampling module 1013i forwards the sampled audio signal to an assessment module 1014i. The assessment module 1014i determines whether the sampled audio signal meets a predefined criteria and, based on this, assigns a binary output of 1 if the sampled audio signal meets the criteria and assigns a binary output of 1 if the sampled audio signal does not meets the criteria. In one example, the assessment module 1014i performs a convolution of the sampled audio signal with the original, unprocessed audio signal, and integrates and normalizes the result for comparison with a predefined threshold. If the result passes the threshold, the assessment module 1014i assigns a binary output of 1. If the result does not pass the threshold, the assessment module 1014i assigns a binary output of 0.

The outputs of requests assigned to the first group form a first batch of outputs 106i, while the outputs of requests assigned to the second group form a second batch of outputs 107i. Periodically, the parameter optimization module 102 is retrained using the second batch of outputs 107i and the values of the sampling rate and bit depth associated therewith, selected from the list 105i by the parameter selection module 1012i. The first batch of outputs 106i and the values of the sampling rate and bit depth 104i may also be used in the retraining.

By allocating a majority of the requests to the first group (i.e., P > 0.5), the majority of the captured audio signals are processed using optimized processing parameters. However, a meaningful number of requests result in the generation of training data that is subsequently used to the refine and update the optimization of the processing parameters, which may improve the performance of the system 10, especially if, for example, the environment of the microphone changes over time such that the optimum parameters may change. By utilizing the batched binary BO to produce the list 105i, the parameter space for sampling rate and bit depth is more efficiently searched. This may mean the system 10 converges on better optimized parameters 104i faster and/or requires less processing using sub-optimal parameters to arrive at suitable training data.

Referring now to FIG. 9, the process performed by the process module 101ii may be the computer-assisted machining of a component in response to a request 103ii. The controllable input parameters of the machining process may be, for example, a speed of rotation and a speed of translation of a tool head used to machine the component. The binary output value may indicate whether the resulting component passes a quality control test which may, for example, compare a surface roughness of the component to a predefined value or compare dimensions of the machined component to desired dimensions.

In more detail, a group allocation module 1011ii of the process module 101ii receives a request 103ii to machine a component and allocates the request to one of a first group or a second group. In one example, the group allocation module 1011ii allocates a predefined fraction, P, of all the requests it receives to the first group and allocates a remaining fraction, 1 - P, the second group, where P > 1 - P. In a specific example, P = 0.85, but more generally the value of P may be selected to be in the range 0.65 ≤ P ≤ 0.95, 0.75 ≤ P ≤ 0.95 or 0.80 ≤ P ≤ 0.90.

The group allocation module 1011ii forwards the allocation to a parameter selection module 1012ii. The parameter selection module 1012ii then selects, based on which one of the groups the request has been allocated to, a pair of values for the tool rotation speed and translation speed to use when machining the component. If the request 103ii was allocated to the first group, the parameter selection module 1012ii selects an optimized pair of rotation speed and translation speed values 104ii, which may be stored in memory having been previously received from the parameter optimization module 102. If the request 103ii was instead allocated to the second group, the parameter selection module 1012ii selects one pair of rotation speed and translation speed values from the list 105ii of training pairs, which may be stored in memory having been previously received from the parameter optimization module 102. As noted previously, the parameter selection module 1012ii may select a unused pair of training values, if one is available.

The parameter selection module 1012ii forwards the selected values of the rotation speed and translation speed to a machining control module 1013ii. The machining control module 1013ii interfaces with a tool 30ii which, based on control input from the machining control module 1013ii, machines a component 40ii using the selected values of the tool rotation speed and translation speed. The design of the component itself may be specified in, e.g., a CAD file included with the request 103ii or stored in accessible memory location identified in the request 103ii.

When the machining of the component 40ii is complete, the machining control module 1013ii signals this to a quality control test module 1014ii, along with the values of the tool rotation speed and translation speed used by the machining control module 1013ii. The quality control test 1014ii determines whether the component 40ii passes the quality control test, e.g., whether a surface roughness of the component is below a threshold value. In some examples, a human operator may perform the quality control test and input this to the quality control test module 1014ii via a user interface of the computer system 10. In other examples, the quality control test may be automated and performed using one or more sensors associated with the computer system 10. If the component 40ii passes the quality control test, the quality control test module 1014ii assigns a binary output of 1. If the component does not pass the quality control test, the quality control test module 1014ii assigns a binary output of 0.

The outputs of requests assigned to the first group form a first batch of outputs 106ii, while the outputs of requests assigned to the second group form a second batch of outputs 107ii. Periodically, the parameter optimization module 102 is retrained using the second batch of outputs 107ii and the values of the tool rotation speed and translation speed associated therewith, selected from the list 105ii by the parameter selection module 1012ii. The first batch of outputs 106ii and the values of the tool rotation speed and translation speed 104ii may also be used in the retraining.

By allocating a majority of the requests to the first group (i.e., P > 0.5), the majority of the components 40ii are machined using optimized processing parameters. However, a meaningful number of requests result in the generation of training data that is subsequently used to the refine and update the optimization of the processing parameters, which may improve the performance of the system 10, especially if, for example, the design of components or a material from which they are machined changes over time such that the optimum parameters may change. By utilizing the batched binary BO to produce the list 105ii, the parameter space for tool rotation speed and translation speed is more efficiently searched, which may mean the system 10 converges on better optimized parameters 104ii faster and/or requires less processing using sub-optimal parameters to arrive at suitable training data.

Referring now to FIG. 10, the process performed by the process module 101iii may be a computer-implemented auction process for selling an article, for example a motor vehicle, in response to a request 103iii, e.g., from an owner of the article. The controllable input parameters of the process may be, for example, first and second pricing perturbation values that affect a reserve sale price for the auction. The binary output value may indicate whether the initial request 103iii resulting in a sale at auction, or whether the article was not sold auction (i.e., the owner of the article did not accept the reserve price so the article did not proceed to auction, or the article did proceed to auction but did not sell because the reserve price was too high).

In more detail, a group allocation module 1011iii of the process module 101iii receives a request 103iii to provide an auction reserve process for an article, e.g., a motor vehicle, and allocates the request to one of a first group or a second group. In one example, the group allocation module 1011iii allocates a predefined fraction, P, of all the requests it receives to the first group and allocates a remaining fraction, 1 - P, the second group, where P > 1 - P. In a specific example, P = 0.85, but more generally the value of P may be selected to be in the range 0.65 ≤ P ≤ 0.95, 0.75 ≤ P ≤ 0.95 or 0.80 ≤ P ≤ 0.90.

The group allocation module 1011iii forwards the allocation to a parameter selection module 1012iii. The parameter selection module 1012iii then selects, based on which one of the groups the request has been allocated to, a pair of values for the first and second pricing perturbation values to use when determining the reserve price of the vehicle. If the request 103iii was allocated to the first group, the parameter selection module 1012iii selects an optimized pair of pricing perturbation values 104iii, which may be stored in memory having been previously received from the parameter optimization module 102. If the request 103iii was instead allocated to the second group, the parameter selection module 1012iii selects one pair of pricing perturbation values from the list 105iii of training pairs, which may be stored in memory having been previously received from the parameter optimization module 102. As noted previously, the parameter selection module 1012iii may select a unused pair of training values, if one is available.

The parameter selection module 1012iii forwards the selected value of the first pricing perturbation parameter to the guide price determination module 1013iii. The guide price determination module 1013iii first obtains an initial guide price for the vehicle, for example by querying a database 50iii of guide prices using information included in the request 103iii. For example, the request 103iii may include details of the make, model and year of manufacture of the vehicle, or a vehicle registration number from which the information may be derived, and the guide price determination module 1013iii may use this information to query the database 50iii. The guide price determination module 1013iii may then apply the first pricing perturbation parameter to the initial guide price as a multiplier to generate a perturbed guide price value. For example, the first pricing perturbation parameter may have a value in a range of, e.g., 0% to +5%, in which case the guide price determination module 1013iii multiplies the initial guide price by a value of 1 to 1.05, dependent on the value of the first pricing perturbation parameter, to generate the perturbed guide price value.

The parameter selection module 1012iii forwards the selected value of the second pricing perturbation parameter to a condition adjustment module 1014iii. The condition adjustment module 1014iii first obtains an initial condition adjustment value. In one example, the request 103iii includes responses to questions about the condition of the vehicle submitted through on an online platform, which the condition adjustment module 1014iii uses to calculate the initial condition adjustment value. In other examples, the owner of the vehicle may electronically submit images of the vehicle, either with the request 103iii or at a later time, from which either a human system operator or an image recognition module 60iii may analyse the images and input the initial condition adjustment value to the condition adjustment module 1014iii. The condition adjustment module 1014iii may then apply the second pricing perturbation parameter to the initial condition adjustment value as a multiplier to generate a perturbed condition adjustment value. For example, the second pricing perturbation parameter may have a value in a range of, e.g., -5% to +5%, in which case the guide price determination module 1013iii multiplies the guide price by a value of 0.95 to 1.05, dependent on the value of the second pricing perturbation parameter, to generate the perturbed condition adjustment value.

The guide price determination module 1013iii and the condition adjustment module 1014iii forward the perturbed guide price value and the perturbed condition adjustment value to a reserve price determination module 1015iii. The reserve price determination module 1015iii determines an auction reserve price for the vehicle by combining perturbed condition adjustment value and the perturbed condition adjustment value, e.g., by subtracting the perturbed condition adjustment value from the perturbed guide price value. In some examples, the reserve price determination module 1015iii outputs the determined reserve price to a device 70iii of the owner of the vehicle to confirm they find the auction reserve price acceptable.

The reserve price determination module 1015iii forwards the determined reserve price to an auction module 1016iii which, if the owner of the vehicle accepted the auction reserve price, holds the computer-implemented (e.g., online) auction. If the vehicles sell at auction, the auction module 1016iii assigns a binary output of 1. If the vehicles does not sell at auction, or if the owner of the vehicle did not find accept the reserve price such that no auction was held, the auction module 1016iii assigns a binary output of 0.

The outputs of requests assigned to the first group form a first batch of outputs 106iii, while the outputs of requests assigned to the second group form a second batch of outputs 107iiii. Periodically, the parameter optimization module 102 is retrained using the second batch of outputs 107iii and the values of the first and second price perturbation values associated therewith, selected from the list 105iii by the parameter selection module 1012iii. The first batch of outputs 106iii and the values of the first and second price perturbation values 104iii may also be used in the retraining.

The combination of values of the first and second perturbation values may have a significant impact on the likelihood of a request 103iii ending in a sale at the auction, and it is in the interests of the operator of the auction process module 103iii to find the optimal combination of the first and second perturbation values for maximizing the percentage of articles (e.g., vehicles) that are sold. For example, if the optimal combination of values increases the percentage of articles sold from 2% to 3%, while seemingly only a small increase, it would increase the commission revenue by 50%. The difference in percentage between two points in the parameter space is likely differ by only a very small amount (e.g., 0.1%), thus a considerable number of requests 103iii would be needed to determine this difference. By utilizing the batched binary BO to produce the list 105iii, the parameter space is explored much more efficiently and balances the search between areas of high uncertainty and areas of high success. Thus, the number of requests 103iii required to train the ML model 1021 to identify the optimal combination of values 104iii may be much reduced. This in turn may allow a greater majority of the requests 103iii to the assigned to first group such that a significant majority of the auction requests 103iii are processed using optimized perturbation parameters 104iii, maximizing revenue, to the best knowledge of the computer system 10, for the majority for the majority of requests.

### Methods of Operation

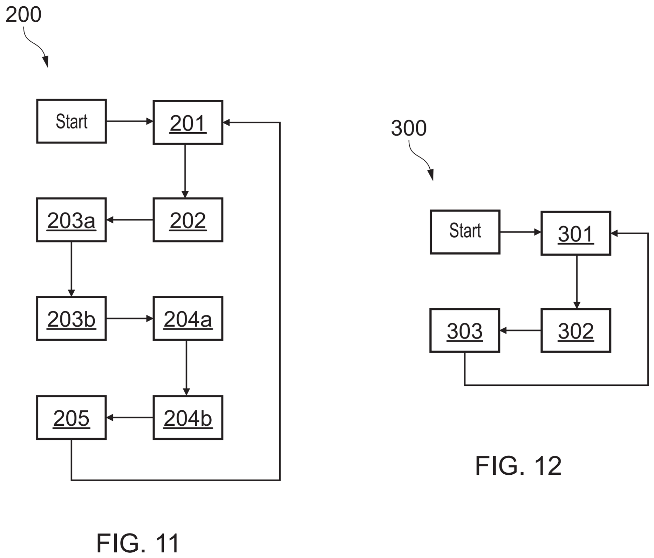

FIGS. 11-12 are flow charts illustrating computer-implemented methods 200, 300 of performing a process having a binary output value, and optimizing input parameters of a process having a binary output value. In both cases, the process has and at least a first controllable input parameter and a second controllable input parameter. A parameter optimization module 102 or function comprises a probabilistic machine learning model 1021 and a batched binary Bayesian Optimizer 1022. The probabilistic machine learning model 1021 is trained to model a relationship between the first controllable input parameter, the second controllable input parameter and the binary output value of the process, the relationship defining an optimized pair of input parameter values 104. The batched binary Bayesian Optimizer 1022 is configured to generate, based on previous binary outputs of the process, using the trained probabilistic machine learning model 1021, a list 105 of training pairs of input parameter values.

Referring first to the method 200 of FIG. 11, at 201, a process module 101 of a computer system 10 receives, from the parameter optimization module 102, the optimized pair of input parameter values 104 comprising an optimized value for a first input parameter of the process and an optimized value for a second input parameter of the process, and the list 105 comprising a plurality of training pairs of input parameter values, each training pair comprising a value for the first input parameter and a value for the second input parameter.

At 202, the process module 101 receives a plurality of requests 103 to perform the process. The plurality of requests 103 may be received at different times.

At 203a, the process module 101 assigns a first plurality of the received requests 103 to a first group for processing using the optimized pair of input parameter values 104. At 203b, the process module 101 assigns a second plurality of the received requests 103 to a second group for processing using the training pairs of pairs of input parameter values of the list 105. It will be understood that each individual request 103 may be assigned to one of the two groups as and when it is received, and that the process module 101 need not, and typically will not, assign the requests 103 to groups in batches.

At 204a, the process module 101 performs the process on each request 103 of the first group of requests using the optimized pair 104 of input parameter values to generate a first batch of binary output values 106. At 204b, or each request 103 of the second group of requests, the process module 101 performs the process on the request using one of the plurality of training pairs of input parameter values of the list 105 to generate a second batch of binary output values 107. It will be understood that, at steps 204a, 204b, each request of the first group, and each request of the second group, may be processed by the process module 101 as and when the request is received and assigned to a group, and that the process module 101 need not, and typically will not, perform the processing of the requests 103 in batches.

At 205, the computer system 10 retrains the parameter optimization module 102 using at least the second batch of binary output values 107 and values of the first and second input parameters associated therewith, to generate a new optimized pair of input parameter values and a new list of training pairs of input parameter values. In some examples, the parameter optimization module 102 may be retrained using both the second batch of binary output values 107 and values of the first and second input parameters associated therewith, and the first batch of binary output values 106 and values 104 of the first and second input parameters associated therewith.

After step 205, having generated a new optimized pair of input parameter values and a new list of training pairs of input parameter values, the method 200 proceeds back to 201 where the parameter optimization module 102 outputs the new optimized pair of input parameter values and the new list of training pairs to the process module 101.

Now referring to the method 300 of FIG. 12, at 301, the parameter optimization module 102 outputs, to a process module 101, the optimized pair 104 of input parameter values and the list 105 of training pairs of input parameter values.

At 302, the parameter optimization module 102 receives binary output values of the process performed using the training pairs of input parameter values of the list 105. In some examples, the parameter optimization module 102 also receives binary output values of the process performed using the optimized pair 104 of input parameter values.

At 303, the parameter optimization module 102 is retrained using the received binary output values and values of the first and second input parameters associated therewith to generate a new optimized pair of input values and a new list of training pairs of input parameters. In some examples, parameter optimization module 102 may be retrained using both the second batch of binary output values 107 and values of the first and second input parameters associated therewith, and the first batch of binary output values 106 and values 104 of the first and second input parameters associated therewith.

After step 303, having generated a new optimized pair of input parameter values and a new list of training pairs of input parameter values, the method 300 proceeds back to 201 where the parameter optimization module 102 outputs the new optimized pair of input parameter values and the new list of training pairs.

The functionality of the process module 101 and/or the parameter optimization module 102 may be implemented through computer-readable code stored on a computer-readable medium. The computer-readable medium may be a non-transitory computer-readable medium. The term "non-transitory computer-readable medium" will be understood to refer a computer-readable medium that does not take the form of a transitory, propagating, signal or wave. Examples of non-transitory computer-readable media include, but are not limited to, RAM, ROM, CD-ROM, DVD, flash memory, magnetic storage drives, solid-state storage drives and the like.

It will be appreciated that the invention is not limited to the examples described above and various modifications may be made without departing from the scope of the appended claims. Except where mutually exclusive, any of the features may be employed separately or in combination with any other features and the disclosure extends to and includes all combinations and sub-combinations of features described herein.

## Claims

1. A computer system (10) for performing a process having a binary output value, the computer system (10) comprising at least one processor (11) and memory (12) configured to implement:
a process module (101) configured to receive requests (103) to perform a process and to perform the process in response to the requests, the process having a binary output value and at least a first controllable input parameter and a second controllable input parameter; and
a parameter optimization module (102) configured to output, to the process module (101):
an optimized pair of input parameter values (104) comprising an optimized value for the first input parameter and an optimized value for the second input parameter; and
a list (105) comprising a plurality of training pairs of input parameter values, each training pair comprising a value for the first input parameter and a value for the second input parameter,
wherein the process module (101) is further configured to assign each received request to a first group or to a second group, to perform the process using the optimized pair of input parameters (104) for each request assigned to the first group to generate a first batch of binary output values (106), and to perform the process using one of the plurality of training pairs of input parameter values for each request assigned to the second group to generate a second batch of binary output values (107);
wherein the computer system (10) is further configured to periodically retrain, using at least the second batch of binary output values (107) and values of the first and second input parameters associated therewith, the parameter optimization module (102) to generate a new optimized pair of input parameter values (104) and a new list (105) of training pairs of input parameter values,
wherein the parameter optimization module (102) comprises:
a probabilistic machine learning model (1021) trained to model a relationship between the first controllable input parameter, the second controllable input parameter and the binary output value of the process, the relationship defining the optimized pair of input parameter values (104); and
a batched binary Bayesian optimizer (1022) configured to generate, using the trained probabilistic machine learning model (1021), the list (105) of training pairs of input parameter values.

2. The computer system of claim 1, configured to retrain the parameter optimization module using both the first batch of binary output values and values of the first and second input parameters associated therewith, and the second batch of binary output values and values of the first and second input parameters associated therewith.

3. The computer system of claim 1 or claim 2, wherein the probabilistic machine learning model of the parameter optimization module is a Gaussian process.

4. The computer system of claim 3, wherein the Gaussian process is a sparse variational Gaussian process that has an integer number, M, of inducing points.

5. The computer system of claim 4, wherein M is less than an integer number, N, of training samples used to train the Gaussian process during each retraining.

6. The computer system of claim 5, wherein M and N satisfy M ≤ N/10.

7. The computer system of any one claims 4 to 6, wherein a total number of training pairs in the list is equal to Q, and wherein M and Q satisfy Q > M.

8. The computer system of any one of the preceding claims, wherein the process module is configured to assign the received requests to the first and second groups according to a predefined ratio, whereby a fraction of a total number of received requests assigned to the first group is approximately equal to P and a fraction of the total number of received requests assigned to the second group is approximately equal to 1 - P, where P > 1 - P.

9. The computer system of claim 8, wherein P satisfies 0.65 ≤ P ≤ 0.95

10. The computer system of any one of the preceding claims, wherein the process module is configured, when performing the process for a request assigned to the second group, to use an unused one of the plurality of training pairs of the list unless all of the plurality of training pairs have been used since the parameter optimization module was last retrained.

11. The computer system of any one of the preceding claims, wherein the process further has a third controllable input parameter, and wherein the parameter optimization module is further configured to output:
an optimized parameter for the third controllable input parameter for use with the optimized pair of input parameter values; and
for each training pair of the plurality of training pairs of the list, a value for the third controllable input parameter.

12. A computer-implemented method (200) of performing a process having a binary output value, the method comprising:
receiving (201), at a process module (101), from a parameter optimization module (102):
an optimized pair of input parameter values (104) comprising an optimized value for a first input parameter of the process and an optimized value for a second input parameter of the process; and
a list (105) comprising a plurality of training pairs of input parameter values, each training pair comprising a value for the first input parameter and a value for the second input parameter;
receiving (202), at the process module (101), a plurality of requests (103) to perform the process;
assigning (203a), by the process module (101), a first plurality of the received requests (103) to a first group for processing using the optimized pair of input parameter values (104);
assigning (203b), by the process module (101), a second plurality of the received requests to a second group for processing using the training pairs of pairs of input parameter values;
performing (204a), by the process module (101), the process on each request of the first group of requests using the optimized pair of input parameter values (104) to generate a first batch of binary output values (106);
for each request of the second group of requests, performing (204b), by the process module (101) the process on the request using one of the plurality of training pairs of input parameter values of the list (105) to generate a second batch of binary output values (107); and
retraining (205) the parameter optimization module (102) using at least the second batch of binary output values (107) and values of the first and second input parameters associated therewith, to generate a new optimized pair of input parameter values (104) and a new list (105) of training pairs of input parameter values,
wherein the parameter optimization module (102) comprises:
a probabilistic machine learning model (1021) trained to model a relationship between the first controllable input parameter, the second controllable input parameter and the binary output value of the process, the relationship defining the optimized pair of input parameter values (104); and
a batched binary Bayesian Optimizer (1022) configured to generate, using the trained probabilistic machine learning model (1021), the list (105) of training pairs of input parameter values.

13. A computer system (10) comprising at least one processor (11) and memory (12) configured to implement a parameter optimization module (102) for optimizing input parameters of a process having a binary output value, the parameter optimization module (102) comprising:
a probabilistic machine learning model (1021) trained to model a relationship between at least a first controllable input parameter of the process, a second controllable input parameter of the process and the binary output value of the process, the relationship defining an optimized pair of input parameter values (104) comprising an optimized value for the first input parameter and an optimized value for the second input parameter; and
a batched binary Bayesian Optimizer (1022) configured to generate, using the trained probabilistic machine learning model (1021), a list (105) comprising a plurality of training pairs of input parameter values, each training pair comprising a value for the first input parameter and a value for the second input parameter,
wherein the parameter optimization module (102) is configured to output the optimized pair of input parameter values (104) and the list (105) of training pairs of input parameter values, and to receive binary output values (107) of the process performed using the training pairs of input parameter values; and
wherein the computer system (10) is configured to periodically retrain, using the received binary output values (107), and values of the first and second input parameters associated therewith, the parameter optimization module (102) to generate a new optimized pair of input values (104) and a new list (105) of training pairs of input parameters.

14. A method (300), operable on a computer system (10), for optimizing input parameters of a process having a binary output value, the computer system (10) comprising:
a probabilistic machine learning model (1021) trained to model a relationship between at least a first controllable input parameter of the process, a second controllable input parameter of the process and the binary output value of the process, the relationship defining an optimized pair of input parameter values (104) comprising an optimized value for the first input parameter and an optimized value for the second input parameter; and
a batched binary Bayesian Optimizer (1022) configured to generate, using the trained probabilistic machine learning model (1021), a list (105) comprising a plurality of training pairs of input parameter values, each training pair comprising a value for the first input parameter and a value for the second input parameter,
the method (300) comprising:
outputting (301) the optimized pair of input parameter values (104) and the list (105) of training pairs of input parameter values;
receiving (302) binary output values (107) of the process performed using the training pairs of input parameter values;
retraining (303), using the received binary output values (107) and values of the first and second input parameters associated therewith, the probabilistic machine learning model (1021) to generate a new optimized pair of input values (104); and
generating (303), by the batched binary Bayesian Optimizer (1022), using the retrained probabilistic machine learning model, a new list (105) of training pairs of input parameters.

15. A computer-readable storage medium having code stored thereon which, when executed by a processor (11) of a computer system (10), causes the computer system (10) to perform the method (200) of claim 12 or the method (300) of claim 14.
